# EUROPEAN PATENT SPECIFICATION

(11) **EP 1 730 087 B1**
(45) Date of publication and mention of the grant of the patent: **03.10.2007**
(21) Application number: 05725078.9
(22) Date of filing: 09.03.2005
(51) Int. Cl.: C03C 17/245, C03C 17/34

(54) **PROCESS FOR THE DEPOSITION OF ALUMINIUM OXIDE COATINGS**
VERFAHREN ZUR ABSCHEIDUNG VON ALUMINIUMOXIDBESCHICHTUNGEN
PROCEDE DE DEPOT DE REVETEMENTS D'OXYDE D'ALUMINIUM

(30) Priority: 10.03.2004 US 797426; 14.09.2004 GB 0420391
(43) Date of publication of application: 13.12.2006
(73) Proprietor: Pilkington North America, Inc., Toledo, Ohio 43697 (US); Pilkington Group Limited, St. Helens Merseyside WA10 3TT (GB)
(72) Inventor: REMINGTON, Jr., Michael, P., Toledo, OH 43615 (US); STRICKLER, David, A., Toledo, OH 43606 (US); VARANASI, Srikanth, Toledo, OH 43606 (US); YE, Liang, Merseyside PR9 7DU (GB)
(74) Representative: Pfenning, Meinig & Partner GbR
(86) International application number: PCT/US2005/007716
(87) International publication number: WO 2005/087678

(56) References cited:
- WO-A-00/75087
- WO-A-20/04085701
- US-A- 3 827 871
- US-B1- 6 238 738

## Description

This invention relates to novel processes for the deposition of an aluminium oxide coating upon the surface of a substrate which in a preferred embodiment is a glass substrate and in a more preferred embodiment is a continuous glass ribbon produced during a float glass production process; to substrates especially glass substrates having an aluminium oxide coating on at least one surface thereof; and to coated substrates especially coated glass substrates having a multilayer coating on at least one surface thereof at least one layer within said multilayer coating comprising an aluminium oxide.

Aluminium oxide coatings are known to be useful in a variety of applications including the electrical and optical industries. The coatings are wear resistant and may be employed as the only layer in a coating or as the top layer in a multilayer coating in order to take advantage of these wear resistant properties. Aluminium oxide coatings have been deposited upon a variety of substrates including metals, semi conductor materials and glass. The coatings may be deposited using a variety of processes such as chemical vapor deposition, spray pyrolysis and magnetron sputtering.

There have been proposals to deposit an aluminium oxide coating on glass using a chemical vapor deposition (hereinafter for convenience CVD) process. USP 4308316 proposes the use of trimethyl aluminium as a precursor in order to deposit an amorphous aluminium oxide layer. WO 97/20963 proposes the use of a dialkyl aluminium alkoxide as a precursor in order to deposit an aluminium oxide coating on a silica substrate or on a glass substrate. USP 6037003 proposes the use of an alkyl dialuminium alkoxide as a precursor in order to deposit an aluminium oxide coating. USP 5217753 proposes the use of triethyl aluminium or diethyl aluminium chloride as a precursor in a process to deposit an aluminium oxide coating on a coated glass substrate having a first layer of titanium oxide and a second layer of a silicon complex on to which the aluminium oxide is deposited.

Atmospheric pressure CVD processes are used to deposit various coatings upon the surface of the glass ribbon during the float glass production process. The coating can be deposited on the glass ribbon while it is at temperature that is sufficient to drive the deposition reaction. The coater through which the vapor(s) are brought into contact with the surface of the glass ribbon may be positioned in the float bath, in the gap between the float bath and the annealing lehr, or in the annealing lehr. There is an ongoing need for processes which can produce coated glass of a consistent quality over an extended period and thereby improve the economics of the production process.

We have now discovered that the deposition of an aluminium oxide coating using a CVD process at atmospheric pressure takes place rapidly and evenly when a carboxylic acid ester is present in the vapor which is contacted with the glass. The introduction of an ester into the vapor in this way provides a process which deposits an aluminium oxide coating of a consistent quality at a higher deposition rate and which enables the deposition of a coating on a continuous glass ribbon during a float glass production process to be operated over an extended period. We have also discovered that the coatings obtained from certain of these novel deposition processes exhibit new and improved properties and these novel coated substrates especially coated glass substrates provide a second aspect of this invention.

From a first aspect this invention provides a process for depositing an aluminium oxide coating on the surface of a substrate which is at an elevated temperature which comprises contacting a surface of said substrate with a fluid mixture comprising an aluminium precursor and a carboxylic acid ester.

The aluminium precursor may be any compound of aluminium which can be vaporized under atmospheric pressure at a temperature which is below the temperature at which it reacts with the ester or with any co oxidant which may be present. Any of the aluminium compounds which have previously been proposed for use in CVD processes for the deposition of alumina are potentially useful in the processes of this invention. Examples of organo aluminium compounds which may be used as a precursor include trialkyl aluminium compounds such as trimethyl aluminium and triethyl aluminium; alkyl dialuminium alkoxides for example those having the general formula RₙAl₂(OR¹)₆₋ₙ wherein R and R¹ which may be the same or different represent alkyl groups comprising from 1 to 5 carbon atoms and n is an integer having a value of from 1 to 5; dialkyl aluminium alkoxides for example those having the general formula R₂AIOR¹ wherein R and R¹ which may be the same or different represent alkyl groups having from 1 to 5 carbon atoms; alkyl aluminium halides having the general formula RₙAlX₃₋ₙ wherein R represents an alkyl group comprising from 1 to 5 carbon atoms, X represents a halogen atom preferably a chlorine atom and n is an integer having a value of 1 or 2. The preferred organo aluminium compounds for use in the processes of this invention are dimethyl aluminium chloride and diethyl aluminium chloride.

In especially preferred embodiments, the aluminium precursor is an inorganic aluminium compound. Examples of inorganic aluminium compounds which may be used as a precursor in the processes of this invention include aluminium trihalides having the general formula AIX₃ wherein X represents a halogen atom and is most preferably a chlorine atom.

The carboxylic acid esters which are useful in the processes of the present invention are compounds having the general formula R-C(O)-O-C-(X)(X¹)-C(Y)(Y¹)-R¹ wherein R and R¹, which may be the same or different, represent hydrogen atoms or alkyl groups having from 1 to 8 carbon atoms and X, X¹, Y and Y¹ represent alkyl groups comprising from 1 to 4 carbon atoms or hydrogen atoms; preferably at least one of Y or Y¹ represents a hydrogen atom. The ester preferably comprises from 3 to 18 carbon atoms and preferably from 3 to 6 carbon atoms.

Preferred esters for use in the processes of this invention include ethyl formate, ethyl acetate, ethyl propionate, ethyl butyrate, n-propyl formate, n-propyl acetate, n-propyl propionate, n-propyl butyrate, isopropyl formate, isopropyl acetate, isopropyl propionate, isopropyl butyrate, n-butyl formate, n-butyl acetate, sec butyl acetate and t-butyl acetate.

The most preferred esters for use in the processes of the present invention are ethyl esters especially ethyl formate, ethyl acetate and ethyl propionate. The most preferred of these is ethyl acetate.

The processes of the present invention require the preparation of a fluid mixture comprising the aluminium source and the carboxylic acid ester. The mixture should be maintained at a temperature which is below that at which the aluminium source reacts to form aluminium oxide. The mixture is preferably maintained at a temperature which is below the decomposition temperature of the ester.

Where the fluid mixture is a vapor, the aluminium source and the ester are preferably compounds which can be volatilized at a suitably low temperature. The preferred aluminium sources are those which are liquid at room temperature or those which may be dissolved in a solvent to form a solution which can be vaporized.

The fluid mixture is preferably a gaseous mixture. The components of the gaseous mixture may be combined on or at the surface of the substrate but normally they are combined to form a precursor gas mixture which is then brought into contact with the surface of the substrate. The gaseous mixture generally comprises a carrier gas such as nitrogen or helium. The mixture is maintained at a temperature below the decomposition temperature of the ester and sufficiently high to maintain the components in the vapor phase.

The precursor gas mixture is introduced into the space immediately above a surface of the substrate. That surface should be at an elevated temperature which is sufficiently high to initiate a reaction between the aluminium precursor and the carboxylic acid ester and lead to the deposition of an aluminium oxide coating on the surface of the substrate. The temperature of the substrate is generally in the range 350°C to 700°C, more preferably 550 to 700°C and most preferably 600 to 650°C.

The deposition process may be carried out using known techniques and apparatus. The preferred form of CVD is laminar flow CVD, although turbulent flow CVD may be used.

The substrate is generally one which has a flat surface onto which the coating is deposited. The preferred substrate is a glass substrate. The substrate may be a glass sheet, but in a preferred embodiment the substrate is a continuous glass ribbon produced as part of a float glass production process.

The temperature of the ribbon produced in a float glass production process falls as it flows away from the furnace. The temperature of the glass ranges from about 1100°C at the delivery end of the float bath to about 200°C at the point where the ribbon leaves the annealing lehr. CVD processes are generally carried out at a point where the glass ribbon is dimensionally stable and its temperature is of the order of 800°C. The temperature at the exit of the float bath is generally of the order of 600°C and the temperature at the entrance to the annealing lehr is of the order of 580°C.

The process of the present invention may be carried out in the float bath, in the gap between the float bath and the annealing lehr, or in the annealing. In the preferred embodiments, the coating is carried out in the float bath.

CVD processes to deposit a metal oxide or a silicon oxide coating on the surface of the glass ribbon in a float glass production process are well known and are widely used to produce coated glass. The CVD processes of this invention may be carried out using the known apparatus and techniques.

The rate of flow of the fluid mixture should be adjusted to provide the desired deposition rate and a coating of the required thickness and quality. The optimum rate is affected by a variety of factors including the nature and temperature of the substrate, the surface area of the substrate, the line speed of the ribbon in a. float glass production process and the rate at which the exhaust gas is removed from the coating apparatus.

The aluminium precursor and the carboxylic acid ester will generally comprise from 1.0 to 15.0 % preferably from 2.0 to 8.0 % by volume of the precursor gas mixture. The molar ratio of the aluminium precursor to the carboxylic acid ester will preferably be in the range 0.1:1.0 to 0.5:1.0 more preferably in the range 0.2:1.0 to 0.4:1.0. The balance of fluid mixture may be comprised of an inert carrier gas which is preferably nitrogen or helium.

The carboxylic acid ester is normally the only oxygen containing species in the fluid mixture. However a minor proportion of another oxygen containing compound and specifically of oxygen (or air) may be utilized

The processes of this invention provide a higher deposition rate than those of the prior art i.e. those processes which do not utilize a carboxylic acid ester. The processes of this invention may result in the deposition of an aluminium oxide coating which is less powdery than coatings obtained using the processes of the prior art.

The aluminium oxide coating will generally have stoichiometry corresponding to that of aluminium oxide i.e. Al₂O₃. Coatings which are slightly oxygen deficient may also be produced and may be useful.

The coating may be deposited directly onto bare glass or onto a glass onto which one or more coatings have previously been deposited. Such multilayer coatings may be deposited onto the glass ribbon in a float glass manufacturing process by arranging a plurality of coating stations along the ribbon.

One type of coating which may be deposited onto the glass before the aluminium oxide layer is an alkali metal blocking layer. Such layers are known in the art. The preferred blocking layer in this invention is a silicon oxide blocking layer. The silicon oxide may be silica i.e. it may have the stoichiometry SiO₂ or it may comprise other elements such as carbon (such layers commonly referred to as silicon oxycarbide and deposited e.g. as described in GB 2199848) or nitrogen (such layers being referred to as silicon oxynitride).

Another type of coating which may be deposited onto the glass before the aluminium oxide layer is an anti iridescent layer or layers such as those which are described in USP 4377613. Typically such an underlayer comprises a tin oxide film deposited directly onto the glass and a silica film deposited on top of the tin oxide.

The thickness of the aluminium oxide coating is normally in the range 300Å to 2000Å, more preferably in the range 500Å to 1500Å and most preferably in the range 600Å to 1200Å. The aluminium oxide coating produced using the processes of this invention have a refractive index of from 1.5 to 1.7 most commonly approximately 1.6 these values being the mathematical average of measurements made in a wavelength range of 340-770 nm. This refractive index means that the aluminium oxide layer could be used to replace existing undercoats which provide color suppression properties such as silicon oxycarbide coatings and silica/tin oxide coatings.

The aluminium oxide coatings of this invention may be smoother than existing coatings most notably the silicon oxycarbide coatings. The aluminium oxide coatings may have a surface having an Rms of from 1.0 to 5.0 nm. Coatings such as this which are relatively smooth may be used as haze reducing layers by depositing them on top of a coating which is relatively rough. Haze reducing coatings are known in the art and have been described for example in GB 2136316 and EP 782975. An example of a relatively rough coating onto which an aluminium oxide coating may usefully be deposited as a haze reducing coating using the processes of this invention is a tin oxide coating and specifically a tin oxide coating which has been deposited using a CVD process. A coated glass having a tin oxide coating and an aluminium oxide coating deposited on it as a haze reducing layer represents another embodiment of the present invention. Preferably, such coated glasses are produced by depositing a tin oxide coating directly onto the glass using a CVD process.

The aluminium oxide coatings of this invention have a hardness which is typically from 8 to 10 Mohs at 20°C.

The processes of this invention may also be used to produce a mixed oxide of aluminium and another metal. Preferably, such mixed oxides comprise a major proportion of aluminium and a minor proportion of another metal. Typically the metal content of these mixed oxides comprises at least 90 mole % of aluminium and 10 mole % or less of another metal or metals. Such mixed oxides may be produced by incorporating an appropriate quantity of a source of the additional metal into the fluid mixture. Examples of additional metals which may usefully be incorporated include tin and zinc. A variety of tin sources are used in CVD processes for example mono butyl tin trichloride and these may be incorporated into the fluid mixture. Similarly suitable sources of zinc such as diethyl zinc are available and may be used in the processes of this invention. The presence of these additional metals can increase the refractive index of the layer and this may be useful in certain applications. The presence of the additional metal may also render the coating electrically conducting.

Further, the aluminium oxide coatings may be doped, for example with fluorine, if desired. Such fluorine doping may affect certain optical constants of the coating and/or may impart certain properties to the outer surface of the coating, e.g., hydrophobicity, etc.

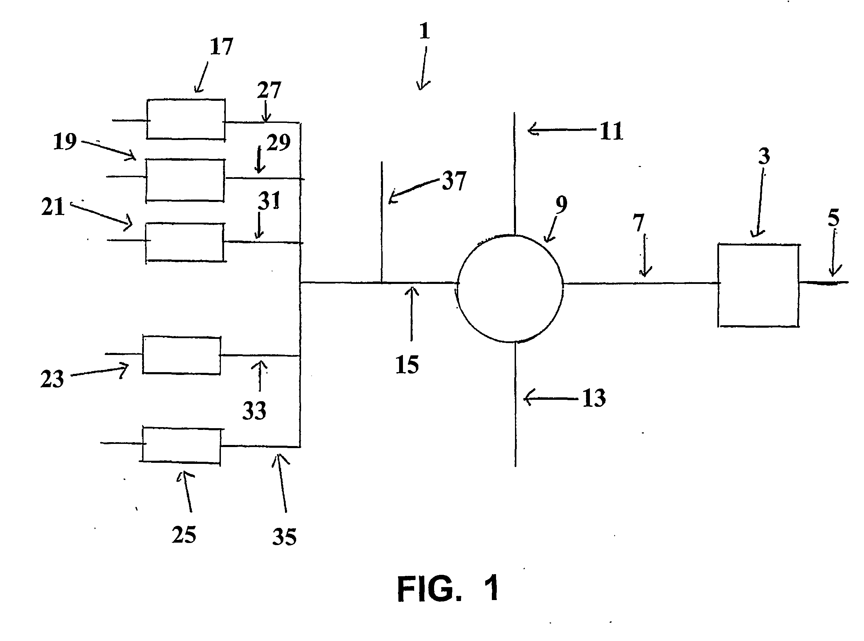

Figure 1 illustrates schematically an example of a static chemical vapor deposition reactor and gas delivery system useful for carrying out the processes of the present invention and as used in Examples 1 - 7.

In Figure 1 a static chemical vapor deposition reactor and gas delivery system generally designated 1 comprises a reactor 3 having an outlet line 5 and an inlet line 7 both of which may be wound and heated with heating tape so as to reduce the likelihood of condensation in those lines. Line 7 connects to a four way valve 9. The other connections to the valve 9 are line 11 which connects to a purge gas source, line 13 which connects to a waste gas furnace and line 15 which connects to bubblers 17, 19, and 21 and to motorized heated syringes 23 and 25. Lines 27, 29 and 31 feed vapors produced in the bubblers to line 15. Lines 33 and 35 feed liquids injected from the syringe drivers into line 15. Line 37 connects to a nitrogen source.

All gas volumes are measured at standard temperature and pressure unless otherwise stated. The thickness values quoted for the layers were determined using high resolution scanning electron microscopy and optical modelling of the reflection and transmission spectra of the coated glass. Thickness of the coatings was measured with an uncertainty of about 5%. The roughness of the surface of the coatings was determined using Tapping Mode AFM.

The process conditions of examples 1 to 7 are summarized in Table 1.

**Table 1**

| Example | 1 | 2 | 3 | 4 | 5 | 6 | 7 |
|---|---|---|---|---|---|---|---|
| Al precursor | DMAC (1.0M) in hexane | DMAC (1.0M)in hexane | TEDA | DMAC (1.0M) in hexane | DMAC 97% | DMAC 97% | DMAC 97% |
| Substrate | Glass/ SiO₂ | Glass/ SiO₂ | Glass/ SiO₂/ SnO₂ | Glass/ SiO₂ | Glass/ SiO₂ | Glass/ SiO₂/ SnO₂ | Glass/ SiO₂/ SnO₂ |
| | | | | | | | |
| Syringe 1 | DMAC | DMAC | TEDA | DMAC | | | |
| Flow Rate | 1.25 ml/min | 1.25 ml/min | 0.4 ml/min | 0.4 ml/min | | | |
| Temp°C | 90 | 90 | 150 | 120 | | | |
| | | | | | | | |
| Syringe 2 | | MBTC | EtOAc | | | | H₂O |
| Flow Rate | | 1.12 ml/min | 0.6 ml/min | | | | 0.32 ml/min |
| Temp°C | | N/a | 150 | | | | 120 |
| | | | | | | | |
| Bubbler 1 | EtOAc | EtOAc | | EtOAc | EtOAc | EtOAc | EtOAc |
| Temp°C | 40 | 42 | | 56 | 52 | 43 | 46 |
| Carrier N₂ sccm | 400 | 400 | | 350 | 450 | 450 | 450 |
| | | | | | | | |
| Bubbler 2 | | | | DEZ 15w% | DMAC | DMAC | DMAC |
| temp°C | | | | 66 | 27 | 28 | 29 |
| Carrier sccm | | | | 800 | 230 | 250 | 250 |
| | | | | | | | |
| Oxygen flow sim | 0.15 | 0.15 | 0.06 | | | 0.15 | |
| | | | | | | | |
| N2 Balance flow sim | 10 | 8 | 4 | 5 | 5 | 7 | 7 |
| Glass temp°C | 625 | 600 | 600 | 625 | 650 | 650 | 650 |

| | | | | | | | |
|---|---|---|---|---|---|---|---|
| DMAC - Dimethyl aluminium chloride TEDA-Triethyl dialuminium tri sec butoxide DEZ - Diethyl zinc MBTC- Monobutyl tin trichloride | | | | | | | |

The following experimental conditions are applicable to Examples 8 to 13. A laboratory furnace having a conveyor enabling glass sheets to be moved through the furnace contains a single 25.4 cms (10 inch) wide bi directional coater. The coater is adapted to convey vaporized reactants to the surface of the glass sheet. The glass sheet is preheated to a temperature of 632°C.

The vapor streams fed to the coater are prepared using source chambers known as bubblers which are maintained at specific temperatures. An inert gas such as helium or nitrogen is introduced into the bubblers at a controlled rate so as to entrain the reactant in that bubbler and convey it to the coater and thereafter to the surface of the glass.

**Table 2**

| Example | 8 | 9 | 10 | 11 | 12 | 13 |
|---|---|---|---|---|---|---|
| AI precursor | DEAC pure | DEAC pure | DEAC pure | DEAC pure | DEAC pure | DEAC pure |
| | | | | | | |
| Substrate | Glass | Glass/ SiCO | Glass/ SiO₂ SnO₂ | Glass/ SiO₂/ SnO₂ | Glass/ SiO₂ | Glass/ SiCO |
| | | | | | | |
| Bubbler 1 | DEAC | DEAC | DEAC | DEAC | DEAC | DEAC |
| temp°C | 160 | 160 | 160 | 160 | 160 | 160 |
| Carrier slm | 1 | 1 | 1 | 1.4 | 1.4 | 1.4 |
| | | | | | | |
| Bubbler 2 | EtOAc | EtOAc | EtOAc | EtOAc | EtOAc | EtOAc |
| temp°C | 60 | 60 | 60 | 60 | 60 | 60 |
| Carrier slm | 1 | 1 | 1.4 | 2 | 2 | 2 |
| | | | | | | |
| He Balance flow sim | 35 | 35 | 35 | 35 | 35 | 35 |
| | | | | | | |
| Conveyor speed inch/min | 125 | 125 | 125 | 125 | 300 | 300 |
| | | | | | | |
| Glass temp°C | 632 | 632 | 632 | 632 | 632 | 632 |
| | | | | | | |
| Coating thickness A | 355 | 625 | 757 | 1088 | 828 | 1067 |
| | | | | | | |
| Refractive Index | | | | | 1.606 | |
| | | | | | | |
| Ra nm | | 1.4 | | 7.4 | 0.4 | 1.9 |

The following experimental conditions are applicable to Examples 14-21, in which the aluminium precursor is an inorganic aluminium compound. A laboratory furnace having a moving conveyor to more a glass sheet, or sheets, through said furnace at a rate of 381-cms/minute (150 inches/minute) (ipm), also contained a single, 25.4 cms. (10-inch wide), bi-directional coater, the coater being suitable for conveying vaporized reactants to the surface of the glass sheets in order to form a film or film stack by chemical vapor deposition.

The glass sheets were heated to approximately 632°C, while the coater, at the reactor face, i.e., the portion nearest the glass surface, was at a temperature of approximately 260°C.

Total gas flow was essentially 35 standard liters per minute (sim) for all examples except Example 19, which was essentially 32 sim.

Preparation of the various precursor materials was accomplished by utilizing multiple source chambers known as "bubblers," there being one for each of ethyl acetate (EtOAc) and aluminium trichloride (AlCl₃) which were maintained at specific temperatures. Helium gas was introduced into the bubbler at a particular flow rate. Alternatively, the EtOAc could have been delivered using a heated thin film evaporator.

The resulting aluminium oxide coatings produced by the inventive method have been found to have refractive index values in the range of 1.5-1.65, permitting the achievement of desired optical effects, especially when used in combination with other coating layers.

Table 3 summarizes the deposition conditions and the resulting film thickness for the examples. Film thickness was determined optically for examples 19-21, while chemical etching and subsequent profilometry was used for examples 14-18.

**Table 3**

| Example | % AlCl₃ | % EtOAc | % | % HF | Thickness (Å) | Growth rate (Å/s) |
|---|---|---|---|---|---|---|
| 14 | 3 | 9 | 15 | 0 | 1018 | 254.5 |
| 15 | 1 | 6 | 15 | 0 | 1013 | 253.3 |
| 16 | 1 | 3 | 0 | 0 | 1285 | 321.3 |
| 17 | 3 | 6 | 7.5 | 0 | 1991 | 497.8 |
| 18 | 1 | 9 | 15 | 0 | 1017 | 254.3 |
| 19 | 7 | 9 | 0 | 0 | 1788 | 447 |
| 20 | 2 | 6 | 0 | 1.4 | 851 | 212.8 |
| 21 | 2 | 6 | 0 | 2.9 | 949 | 237.3 |

The various reactants described above were combined in the coater to deposit an aluminium oxide coating on, in examples 19-21, a clear soda-lime-silica glass sheet whereon a SiO₂ layer 200Å thick had previously been deposited. Examples 14-18 were deposited on Pilkington Energy Advantage^{™} glass, in which the top layer is SnO₂:F. As can be seen from the information presented in Table 3, the combination of AlCl₃ and EtOAc without other constituents, when combined and deposited in the manner described herein, forms aluminium oxide films at useful thicknesses due to very satisfactory growth rates. Addition of molecular oxygen, in some instances, appears to greatly enhance film growth rate and film thickness. Addition of dopants such as fluorine do not appear to enhance growth rates or film thickness, but may provide other benefits.

Preferably, the aluminium oxide coatings are deposited at a rate of over 200Å/second. High deposition rates may be important when coating substrates in a manufacturing process. This is particularly true for an on-line float glass process where the glass ribbon is travelling at a specific line speed on the order of several hundred inches per minute and where a specific coating thickness is required. The deposition rates obtained with the preferred embodiments of the present invention may be two or more times higher than the deposition rate with other known methods for depositing aluminium oxide coatings. Especially high deposition rates for aluminium oxide may be achieved with the present invention using a precursor mixture including an ester having 3 to 6 carbon atoms.

The deposition rate is dependent upon the particular ester used, and the concentrations of both the ester and the aluminium chloride, as well as the temperature of the glass. For any particular combination of compounds, the optimum concentrations (and in particular the optimum proportion of the ester to aluminium chloride) and flow rates for rapid coating deposition may be determined by simple trial. However, it will be appreciated that the use of higher concentrations of reactants and high gas flow rates is likely to result in a less efficient overall conversion of the reactants into a coating, so that the optimum condition for commercial operation may differ from the conditions which provide the highest deposition rates.

In the case of the preferred embodiments utilizing an inorganic aluminium precursor, the gaseous reactant mixture which is delivered to the surface of the hot glass substrate in accordance with the invention most preferably includes (all percentages being mole %) from about 0 to about 40% oxygen, from about 1.5 % to about 25% organic ester, and from about 0.5% to about 10% aluminium halide, and most preferably includes from about 0% to about 25% oxygen, from about 3% to about 15% organic ester, and from about 1% to about 5% aluminium halide.

## Claims

1. A process for depositing an aluminium oxide coating upon the surface of a continuous glass ribbon provided at an elevated temperature during a float glass production process by contacting said surface with a fluid mixture comprising an aluminium precursor which is **characterized in that** the fluid mixture further comprises a carboxylic acid ester.

2. A process according to claim 1 **characterized in that** the aluminium precursor is an inorganic aluminium compound.

3. A process according to claim 2 **characterized in that** the aluminium compound is an aluminium trihalide having the general formula AlX₃ wherein X represents a halogen atom.

4. A process according to claim 2 **characterized in that** the ester is at a concentration of about 1 to 9 times the concentration of the aluminium halide.

5. A process according to any of the preceding claims **characterized in that** the aluminium compound is aluminium trichloride.

6. A process according to any of the preceding claims **characterized in that** the substrate has a silica coating thereon, and the aluminium oxide coating is deposited over the silica coating.

7. A process according to any of the preceding claims **characterized in that** the aluminium oxide coating has an average refractive index of about 1.5-1.65 in the 400 to 800 nm range of the electromagnetic spectrum.

8. A process according to claim 1 **characterized in that** the aluminium precursor is an organo aluminium compound.

9. A process according to claim 8 **characterized in that** the aluminium compound is an alkyl dialuminium alkoxide having the general formula RₙAl₂(OR¹)₆₋ₙ wherein R and R¹ which may be the same or different represent alkyl groups comprising from 1 to 5 carbon atoms and n is an integer having a value of from 1 to 5.

10. A process according to claim 9 **characterized in that** the aluminium compound is an alkyl aluminium halide having the general formula RₙAlX₃₋ₙ wherein R represents an alkyl group comprising from 1 to 5 carbon atoms, X represents a halogen atom preferably a chlorine atom and n is an integer having a value of 1 or 2.

11. A process according to claim 10 **characterized in that** the aluminium compound is diethyl aluminium chloride.

12. A process according any of the preceding claims **characterized in that** the carboxylic acid ester is a compound having the general formula R-C(O)-O-C-(X)(X¹)-C(Y)(Y¹) -R¹ wherein R and R¹ which may be the same or different represent hydrogen atoms or alkyl groups having from 1 to 8 carbon atoms and X, X¹, Y and Y¹ which may be the same or different represent hydrogen atoms or alkyl groups comprising from 1 to 4 carbon atoms.

13. A process according to any of the preceding claims **characterized in that** the ester comprises from 3 to 18 carbon atoms.

14. A process according to any of the preceding claims **characterized in that** the ester is selected from the group comprising ethyl formate, ethyl acetate, ethyl propionate, ethyl butyrate, n-propyl formate, n-propyl acetate, n-propyl propionate, n-propyl butyrate, isopropyl formate, isopropyl acetate, isopropyl propionate, isopropyl butyrate, n-butyl formate, n-butyl acetate, sec butyl acetate and t-butyl acetate.

15. A process according to any of the preceding claims **characterized in that** the ester is ethyl acetate.

16. A process according to any of the preceding claims **characterized in that** the temperature in the substrate is in the range 350° C to 700° C.

17. A process according to claim 16 **characterized in that** the temperature of the substrate is in the range 550° C to 700° C.

18. A process according to any of the preceding claims **characterized in that** the substrate is a continuous glass ribbon produced during a float glass process and that the fluid mixture is brought into contact with the ribbon at a point which is within the float bath.

19. A process according to any of the preceding claims **characterized in that** the fluid mixture further comprises a tin precursor such that an aluminium oxide coating containing tin is deposited upon the surface of the substrate.

20. A process according to claim 19 **characterized in that** the tin precursor is monobutyl tin trichloride.

21. A process according to any of the preceding claims **characterized in that** the fluid mixture further comprises a zinc precursor such that an aluminium oxide coating containing zinc is deposited upon the surface of the substrate.

22. A process according to claim 21, **characterized in that** the zinc precursor is diethyl zinc.

## Patentansprüche

1. Verfahren zum Aufbringen einer Aluminiumoxidbeschichtung auf die Oberfläche eines kontinuierlichen Glasbandes, das bei einer erhöhten Temperatur während eines Floatglass-Herstellungsprozesses erhalten wird, durch Inkontaktbringen der Oberfläche mit einer Fluidmischung aufweisend einen Aluminiumvorläufer, welches **dadurch gekennzeichnet ist, dass** die Fluidmischung weiterhin einen Carbonsäureester aufweist.

2. Verfahren nach Anspruch 1, **dadurch gekennzeichnet, dass** der Aluminiumvorläufer eine anorganische Aluminiumverbindung ist.

3. Verfahren nach Anspruch 2, **dadurch gekennzeichnet, dass** die Aluminiumverbindung ein Aluminiumtrihalogenid mit der allgemeinen Formel AlX₃ ist, worin X ein Halogenatom darstellt.

4. Verfahren nach Anspruch 2, **dadurch gekennzeichnet, dass** der Ester eine Konzentration aufweist, die etwa das 1- bis 9-fache der Konzentration des Aluminiumhalogenids ist.

5. Verfahren nach einem der vorhergehenden Ansprüche, **dadurch gekennzeichnet, dass** die Aluminiumverbindung Aluminiumtrichlorid ist.

6. Verfahren nach einem der vorhergehenden Ansprüche, **dadurch gekennzeichnet, dass** das Substrat eine Silicabeschichtung hat und die Aluminiumoxidbeschichtung auf die Silicabeschichtung aufgebracht wird.

7. Verfahren nach einem der vorhergehenden Ansprüche, **dadurch gekennzeichnet, dass** die Aluminiumoxidbeschichtung einen durchschnittlichen Brechungsindex von etwa 1,5 - 1,65 in dem 400 - 800 nm-Bereich des elektromagnetischen Spektrums hat.

8. Verfahren nach Anspruch 1, **dadurch gekennzeichnet, dass** der Aluminiumvorläufer eine Organoaluminiumverbindung ist.

9. Verfahren nach Anspruch 8, **dadurch gekennzeichnet, dass** die Aluminiumverbindung ein Alkyldialuminiumalkoxid mit der allgemeinen Formel RₙAl₂(OR¹)₆₋ₙ ist, worin R und R¹, die dieselben oder unterschiedlich sein können, Alkylgruppen darstellen, die 1 bis 5 Kohlenstoffatome aufweisen, und n eine ganze Zahl mit einem Wert von 1 bis 5 ist.

10. Verfahren nach Anspruch 9, **dadurch gekennzeichnet, dass** die Aluminiumverbindung ein Alkylaluminiumhalogenid mit der allgemeinen Formel RₙAlX₃₋ₙ ist, worin R eine Alkylgruppe aufweisend 1 bis 5 Kohlenstoffatome darstellt, X ein Halogenatom, bevorzugt ein Chloratom darstellt, und n eine ganze Zahl mit einem Wert von 1 oder 2 ist.

11. Verfahren nach Anspruch 10, **dadurch gekennzeichnet, dass** die Aluminiumverbindung Diethylaluminiumchlorid ist.

12. Verfahren nach einem der vorhergehenden Ansprüche, **dadurch gekennzeichnet, dass** der Carbonsäureester eine Verbindung mit der allgemeinen Formel R-C (O) -O-C- (X) (X¹) -C (Y) (Y¹) -R¹ ist, worin R und R¹, die dieselben oder unterschiedlich sein können, Wasserstoffatome oder Alkylgruppen mit 1 bis 8 Kohlenstoffatomen darstellen, und X, X¹, Y und Y¹, die dieselben oder unterschiedlich sein können, Wasserstoffatome oder Alkylgruppen, die 1 bis 4 Kohlenstoffatome aufweisen, sein können.

13. Verfahren nach einem der vorhergehenden Ansprüche, **dadurch gekennzeichnet, dass** der Ester 3 bis 18 Kohlenstoffatome aufweist.

14. Verfahren nach einem der vorhergehenden Ansprüche, **dadurch gekennzeichnet, dass** der Ester ausgewählt ist aus der Gruppe aufweisend Ethylformiat, Ethylacetat, Ethylpropionat, Ethylbutyrat, n-Propylformiat, n-Propylacetat, n-Propylpropionat, n-Propylbutyrat, Isopropylformiat, Isopropylacetat, Isopropylpropionat, Isopropylbutyrat, n-Butylformiat, n-Butylacetat, sekundäres Butylacetat und t-Butylacetat.

15. Verfahren nach einem der vorhergehenden Ansprüche, **dadurch gekennzeichnet, dass** der Ester Ethylacetat ist.

16. Verfahren nach einem der vorhergehenden Ansprüche, **dadurch gekennzeichnet, dass** die Temperatur des Substrats in dem Bereich von 350 °C bis 700 °C liegt.

17. Verfahren nach Anspruch 16, **dadurch gekennzeichnet, dass** die Temperatur des Substrats in dem Bereich von 550 °C bis 700 °C liegt.

18. Verfahren nach einem der vorhergehenden Ansprüche, **dadurch gekennzeichnet, dass** das Substrat ein kontinuierliches Glasband, das während eines Floatglassprozesses hergestellt wurde, ist, und dass die Fluidmischung an einem Punkt, der sich innerhalb des Floatbades befindet, mit dem Band in Kontakt gebracht wird.

19. Verfahren nach einem der vorhergehenden Ansprüche, **dadurch gekennzeichnet, dass** die Fluidmischung weiterhin einen Zinnvorläufer derart aufweist, dass eine Zinn enthaltende Aluminiumoxidbeschichtung auf die Oberfläche des Substrats aufgebracht wird.

20. Verfahren nach Anspruch 19, **dadurch gekennzeichnet, dass** der Zinnvorläufer Monobutylzinntrichlorid ist.

21. Verfahren nach einem der vorhergehenden Ansprüche, **dadurch gekennzeichnet, dass** die Fluidmischung weiterhin einen Zinkvorläufer derart aufweist, dass eine Zink enthaltende Aluminiumoxidbeschichtung auf die Oberfläche des Substrats aufgebracht wird.

22. Verfahren nach Anspruch 21, **dadurch gekennzeichnet, dass** der Zinkvorläufer Diethylzink ist.

## Revendications

1. Procédé pour le dépôt d'un revêtement d'oxyde d'aluminium sur la surface d'un ruban de verre continu produit à une température élevée pendant un processus de production de verre flotté, par mise en contact de ladite surface avec un mélange fluide comprenant un précurseur d'aluminium, **caractérisé en ce que** le mélange fluide comprend en outre un ester d'acide carboxylique.

2. Procédé selon la revendication 1, **caractérisé en ce que** le précurseur d'aluminium est un composé inorganique contenant de l'aluminium.

3. Procédé selon la revendication 2, **caractérisé en ce que** le composé contenant de l'aluminium est un trihalogénure d'aluminium de formule générale AlX₃, dans laquelle X représente un atome d'halogène.

4. Procédé selon la revendication 2, **caractérisé en ce que** l'ester est à une concentration représentant environ 1 à 9 fois la concentration de l'halogénure d'aluminium.

5. Procédé selon l'une quelconque des revendications précédentes, **caractérisé en ce que** le composé contenant de l'aluminium est le trichlorure d'aluminium.

6. Procédé selon l'une quelconque des revendications précédentes, **caractérisé en ce que** le substrat est revêtu d'une couche de silice, et le revêtement d'oxyde d'aluminium est déposé sur la couche de silice.

7. Procédé selon l'une quelconque des revendications précédentes, **caractérisé en ce que** le revêtement d'oxyde d'aluminium a un indice de réfraction moyen d'environ 1,5-1,65 dans la région de 400 à 800 nm du spectre électromagnétique.

8. Procédé selon la revendication 1, **caractérisé en ce que** le précurseur d'aluminium est un composé organo-aluminique.

9. Procédé selon la revendication 8, **caractérisé en ce que** le composé contenant de l'aluminium est un alcoolate d'alkyldialuminium de formule générale RₙAl₂(OR¹)₆₋ₙ dans laquelle R et R¹, qui peuvent être identiques ou différents, représentent des groupes alkyle ayant de 1 à 5 atomes de carbone et n est un nombre entier ayant une valeur de 1 à 5.

10. Procédé selon la revendication 9, **caractérisé en ce que** le composé contenant de l'aluminium est un halogénure d'alkylaluminium de formule générale RₙAlX₃₋ₙ dans laquelle R représente un groupe alkyle comprenant de 1 à 5 atomes de carbone, X représente un atome d'halogène, de préférence un atome de chlore, et n est un nombre entier ayant une valeur de 1 ou 2.

11. Procédé selon la revendication 10, **caractérisé en ce que** le composé contenant de l'aluminium est le chlorure de diéthylaluminium.

12. Procédé selon l'une quelconque des revendications précédentes, **caractérisé en ce que** l'ester d'acide carboxylique est un composé de formule générale R-C(O)-O-C-(X)(X¹)-C(Y)(Y¹)-R¹ dans laquelle R et R¹, qui peuvent être identiques ou différents, représentent des atomes d'hydrogène ou des groupes alkyle ayant de 1 à 18 atomes de carbone et X, X¹, Y et Y¹, qui peuvent être identiques ou différents, représentent des atomes d'hydrogène ou des groupes alkyle ayant de 1 à 4 atomes de carbone.

13. Procédé selon l'une quelconque des revendications précédentes, **caractérisé en ce que** l'ester comprend de 3 à 18 atomes de carbone.

14. Procédé selon l'une quelconque des revendications précédentes, **caractérisé en ce que** l'ester est choisi dans l'ensemble comprenant le formiate d'éthyle, l'acétate d'éthyle, le propionate d'éthyle, le butyrate d'éthyle, le formiate de n-propyle, l'acétate de n-propyle, le propionate de n-propyle, le butyrate de n-propyle, le formiate d'isopropyle, l'acétate d'isopropyle, le propionate d'isopropyle, le butyrate d'isopropyle, le formiate de n-butyle, l'acétate de n-butyle, l'acétate de sec-butyle et l'acétate de tert-butyle.

15. Procédé selon l'une quelconque des revendications précédentes, **caractérisé en ce que** l'éther est l'acétate d'éthyle.

16. Procédé selon l'une quelconque des revendications précédentes, **caractérisé en ce que** la température dans le substrat est dans la plage de 350 °C à 700 °C.

17. Procédé selon la revendication 16, **caractérisé en ce que** la température du substrat est dans la plage de 550 °C à 700 °C.

18. Procédé selon l'une quelconque des revendications précédentes, **caractérisé en ce que** le substrat est un ruban de verre continu produit pendant un processus de production de verre flotté et **en ce que** le mélange fluide est mis en contact avec le ruban en un point qui se trouve dans le bain de flottage.

19. Procédé selon l'une quelconque des revendications précédentes, **caractérisé en ce que** le mélange fluide comprend en outre un précurseur d'étain, de sorte qu'un revêtement d'oxyde d'aluminium contenant de l'étain est déposé à la surface du substrat.

20. Procédé selon la revendication 19, **caractérisé en ce que** le précurseur d'étain est le trichlorure de monobutylétain.

21. Procédé selon l'une quelconque des revendications précédentes, **caractérisé en ce que** le mélange fluide comprend en outre un précurseur de zinc, de sorte qu'un revêtement d'oxyde d'aluminium contenant du zinc est déposé à la surface du substrat.

22. Procédé selon la revendication 1, **caractérisé en ce que** le précurseur de zinc est le diéthylzinc.
